# EUROPÄISCHE PATENTANMELDUNG

(11) **EP 1 396 363 A1**
(43) Veröffentlichungstag der Anmeldung: **10.03.2004**
(21) Anmeldenummer: 03017563.2
(22) Anmeldetag: 07.08.2003
(51) Int. Cl.: B60J 7/02

(54) **Führungsmechanik für einen Deckel eines Schiebehebedachs**

(30) Priorität: 03.09.2002 DE 10240638
(71) Anmelder: ArvinMeritor GmbH, 63128 Dietzenbach (DE)
(72) Erfinder: Bachmann, Hubert, 67125 Dannstadt (DE); Weiss, Edgar, 63755 Alzenau (DE)
(74) Vertreter: Kitzhofer, Thomas, Dipl.-Ing.

(57) **Zusammenfassung**

Eine Führungsmechanik für einen Deckel eines Fahrzeugschiebehebedachs hat wenigstens eine seitliche Profilschiene (14), wenigstens je ein längs der Profilschiene (14) zur Verstellung des Deckels (10) vorgesehenes Lagerteil (18, 24) und wenigstens ein Zwischenteil, das mit dem Lagerteil (18, 24) verbunden und zumindest indirekt mechanisch mit dem Deckel (10) gekoppelt ist. Das Zwischenteil, zum Beispiel eine Führungskulisse (16) oder ein Führungsteil (54), weist einen Fortsatz (40) auf, der in die Profilschiene (14) ragt und durch die Profilschiene an einem Verlassen derselben gehindert wird. Dadurch wird die Verbindung zwischen dem Lagerteil (18, 24) und dem Zwischenteil zusätzlich gesichert.

## Beschreibung

Die Erfindung betrifft eine Führungsmechanik für einen Deckel eines Schiebehebedachs, mit wenigstens einer seitlichen Profilschiene, wenigstens je einem längs der Profilschiene zur Verstellung des Deckels beweglichen Lagerteil und einem Zwischenteil, das mit dem Lagerteil verbunden und zumindest indirekt mechanisch, das heißt gegebenenfalls direkt, mit dem Deckel gekoppelt ist.

Eine solche Führungsmechanik ist beispielsweise aus der DE 44 05 742 C1 oder der DE 195 14 585 A1 bekannt. Üblicherweise sind seitlich des Deckels Profilschienen angeordnet, und in jeder Profilschiene laufen mindestens zwei Lagerteile, nämlich ein sogenannter vorderer Gleitschuh und ein sogenannter hinterer Gleitschuh, wobei die Begriffe "vorne" und "hinten" auf den im Fahrzeug eingebauten Zustand und auf die Fahrzeuglängsrichtung bezogen sind. Das vordere Lagerteil bildet das Schwenklager einer Führungskulisse (in Form eines Hebels) mit einer seitlichen Kulissenbahn. Die Führungskulisse ist mit dem Deckel vorzugsweise direkt gekoppelt. In die in der Führungskulisse ausgebildete Kulissenbahn greift ein weiteres Zwischenteil an, welches mit dem hinteren Gleitschuh verbunden ist. Der hintere Gleitschuh wird üblicherweise über ein drucksteif geführtes Kabel bewegt. Eine Nase am Zwischenteil ragt in die Kulissenbahn und sorgt bei Verschiebung des hinteren Gleitschuhs für ein Verschwenken der Führungskulisse und damit für ein Verschwenken des Deckels, um diesen zum Beispiel auszustellen oder, vor seinem Verschieben, am hinteren Ende abzusenken. Die Lagerteile müssen verschiedene Eigenschaften haben, nämlich einerseits wartungsfrei in den Profilschienen gleiten und andererseits eine so hohe Stabilität besitzen, daß sie die über den Fortsatz auf sie einwirkende Kraft, zum Beispiel beim Verstellen, in die Profilschiene einleiten können. Gute Gleiteigenschaften und gute Festigkeitseigenschaften widersprechen sich jedoch teilweise. Mehrkomponentenspritzgußteile sorgen bisher deshalb für einerseits gute Gleiteigenschaften und andererseits für eine hohe Stabilität.

Die Erfindung schafft eine Führungsmechanik, die einfach und kostengünstig ausgebildet ist, sich durch einen geringen Bauraum und eine sehr gute Kraftübertragung vom Zwischenteil in die Profilschiene auszeichnet. Dies wird bei einer Führungsmechanik der eingangs genannten Art dadurch erreicht, daß das Zwischenteil und das Lagerteil unmittelbar miteinander verbunden sind und das Zwischenteil einen Fortsatz hat, der innerhalb der Profilschiene liegt und durch die Profilschiene an einem Verlassen der Profilschiene gehindert wird. Die Profilschiene stellt somit eine Art Verriegelung des Fortsatzes in der Profilschiene dar. Damit kann aber das Lagerteil geringere Festigkeitseigenschaften haben, denn die Profilschiene selbst bildet eine mechanische Sicherung für den Fortsatz. Die erfindungsgemäße Mechanik erlaubt es auch, Kräfte vom Fortsatz weitgehend direkt in' die Profilschiene einzuleiten und das Lagerteil, das vorzugsweise ein Kunststoffteil ist, im wesentlichen nur noch auf Druck zu belasten. Dies erlaubt eine wesentlich einfachere und kostengünstigere Ausführung des Lagerteils.

Gemäß der bevorzugten Ausführungsform ist die Profilschiene C-förmig ausgebildet und umgreift Lagerteil samt Fortsatz. Über die Öffnung des "C" kann sich das Zwischenteil dann in Richtung zum Deckel erstrecken.

Die zumindest indirekte mechanische Koppelung bedeutet, daß das Zwischenteil im Kraftflußweg zwischen dem Lagerteil und dem Deckel liegt. Bevorzugt ist aber eine direkte Kopplung vorgesehen.

Bezogen auf den eingebauten Zustand sichert die Profilschiene den Fortsatz zum Zwischenteil in vertikaler Richtung, also in der Richtung, in der sehr große Kräfte beim Bewegen im Fahrbetrieb auf das Zwischenteil und den Fortsatz ausgeübt werden. Das Lagerteil hat z. B. eine vertikale, nach oben offene Ausnehmung zur Aufnahme des Fortsatzes, aus dem dieser wegen der Profilschiene nicht entweichen kann.

Die erfindungsgemäße Führungsmechanik erlaubt es ferner, das Lagerteil und/oder das Zwischenteil als ein-komponentiges Kunststoffteil auszubilden. Sogar der Fortsatz kann einstückig an das Zwischenteil angeformt und aus Kunststoff ausgeführt sein. Die bisherigen zwei-komponentigen Kunststoffbauteile können entfallen. Durch die Erfindung ist es möglich, die unterschiedlichen Anforderungen auf die Materialeigenschaften der Einzelteile aufzuteilen. So ist das Lagerteil aus einem Kunststoffmaterial, das sehr gute Gleiteigenschaften hat, wogegen das Zwischenteil und der Fortsatz aus einem Werkstoff sind, der entsprechend gute Festigkeitseigenschaften besitzt. Durch die erfindungsgemäße Entkoppelung lassen sich die Bauteile auch auf einfache Weise standardisieren, indem zum Beispiel das gleiche Zwischenteil bei unterschiedlichen Führungsschienen verwendet werden kann und nur das Lagerteil an die Führungsschiene angepaßt ausgeführt ist.

Das Zwischenteil ist beispielsweise eine Führungskulisse, die über den Fortsatz schwenkbar im Lagerteil gelagert ist, es kann aber auch zum Beispiel ein am hinteren Gleitschuh befestigtes Führungsteil sein, dessen Verschiebung eine Schwenkbewegung der Führungskulisse hervorruft. Das Zwischenteil koppelt dann das Lagerteil mit der Führungskulisse.

An das Zwischenteil, welches das Lagerteil mit der Führungskulisse koppelt, kann wenigstens eine Nase einstückig angeformt sein, welche in die bereits zuvor erwähnte Kulissenbahn in der Führungskulisse ragt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht, teilweise im Schnitt, der erfindungsgemäßen Führungsmechanik,
- Figur 2 eine vergrößerte Ansicht des in Figur 1 mit X bezeichneten Bereichs,
- Figur 3 eine perspektivische Draufsicht auf das vordere Lagerteil,

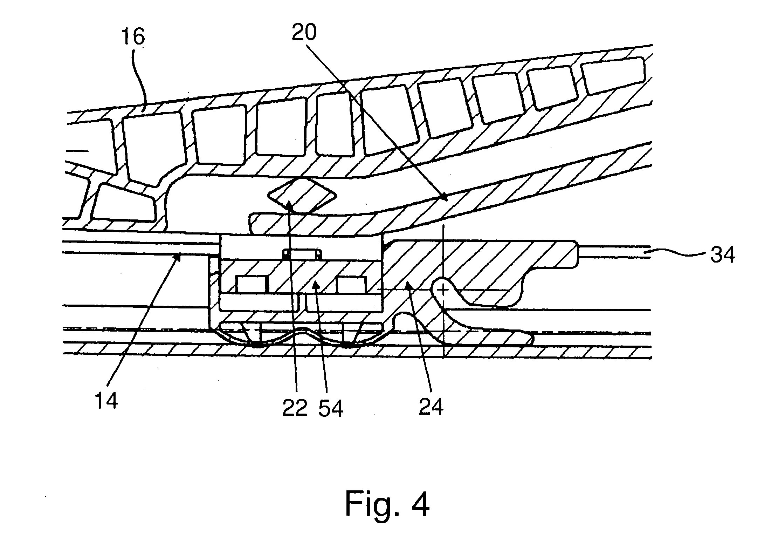

- Figur 4 eine vergrößerte Ansicht des in Figur 1 mit Y bezeichneten Bereichs,
- Figur 5 eine perspektivische Ansicht des hinteren Lagerteils samt Zwischenteil und
- Figur 6 eine Querschnittsansicht durch die Führungsschiene und das hintere Lagerteil samt Zwischenteil.

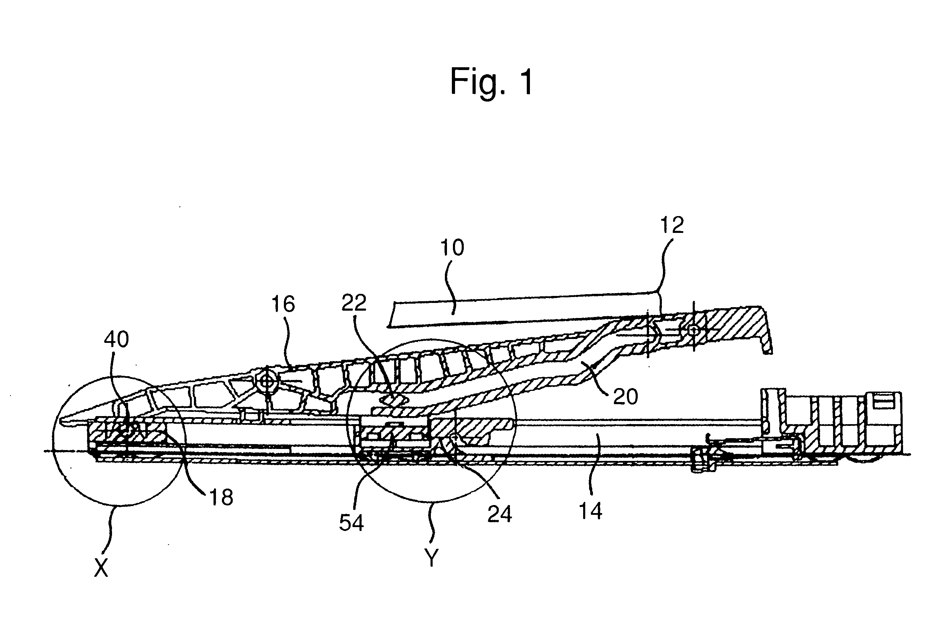

In Figur 1 ist die Führungsmechanik für den Deckel 10 eines Fahrzeugschiebehebedachs in einer Ansicht seitlich zum Fahrzeug dargestellt. Die Führungsmechanik dient dazu, den Deckel 10 in die verschiedenen Stellungen zu bringen, nämlich in die ausgestellte Stellung (in Figur 1 gezeigt), in die geschlossene Stellung (auch Nullstellung genannt) und in die zurückgefahrene Stellung, bei der der Deckel nach hinten gefahren wird und unter das Dach taucht. Zum Zurückfahren muß der hintere Rand 12 des Deckels abgesenkt werden, wie allgemein bekannt.

Die Führungsmechanik ist an beiden Seiten des Deckels im wesentlichen identisch ausgebildet, weshalb in Figur 1 die Führungsmechanik nur einseitig dargestellt ist. Die Führungsmechanik umfaßt eine C-förmige Profilschiene 14, die am Rand der Dachöffnung starr befestigt ist. Ein Hebel in Form einer Führungskulisse 16 ist mit dem Deckel 10 gekoppelt und am vorderen Ende in einem vorderen Lagerteil 18 schwenkbar aufgenommen. Die Führungskulisse 16 besitzt auf jeder ihrer beiden Seitenflächen eine Kulissenbahn 20, wobei beide Kulissenbahnen 20 identisch ausgerührt sind, so daß es ausreicht, nur eine darzustellen. In jeder Kulissenbahn 20 läuft ein Kulissenstein in Form einer Nase 22, die über ein hinteres Lagerteil 24 verfahren werden kann.

Im folgenden wird die Führungsmechanik im Bereich des vorderen und hinteren Lagerteils 18 bzw. 24 näher erläutert.

Das vordere Lagerteil 18, auch vorderer Gleitschuh genannt, besteht aus einem ein-komponentigen Kunststoffmaterial, welches gute Gleiteigenschaften und niedrigen Verschleiß aufweist. Es handelt sich vorzugsweise um ein Spritzgußteil aus POM C9021M (Ticona).

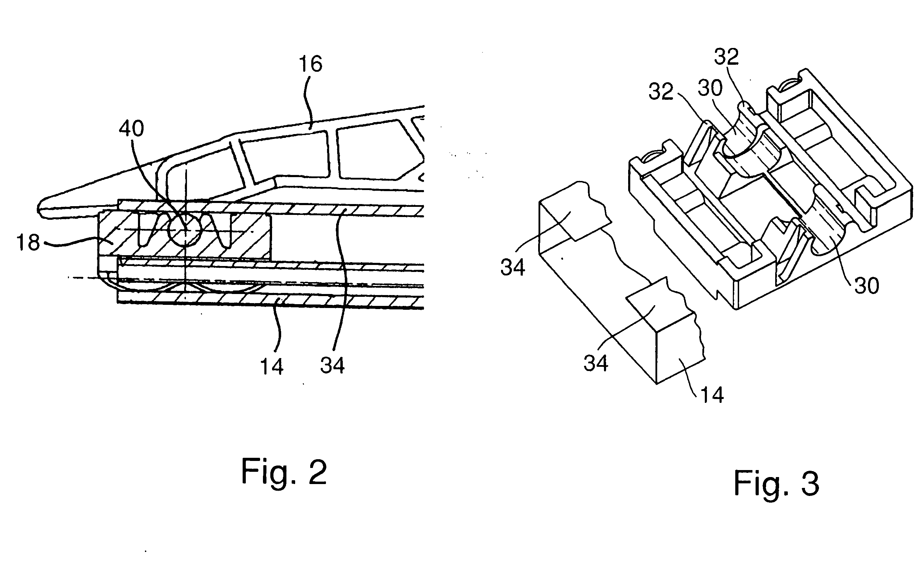

Das vordere Lagerteil 18 ist komplett im Inneren der Profilschiene 14 aufgenommen und längs derselben verschiebbar. Auf seiner Oberseite besitzt das vordere Lagerteil 18 an seinen Seiten jeweils eine C-förmige Ausnehmung 30, die zwischen zwei hakenförmigen Fortsätzen 32 gebildet sind. Die Ausnehmungen 30 liegen unterhalb der oberen Querstege 34 der Profilschiene 14 (siehe Figur 3).

Die Führungskulisse 16 ist ebenfalls ein ein-komponentiges Spritzgußteil, bei dem aber das Hauptaugenmerk auf die Festigkeit gelegt ist, weshalb es zum Beispiel aus einem Kunststoff wie PA6.6 CF20 besteht. Im Bereich des vorderen Endes der Führungskulisse 16 sind auf beiden Seiten Fortsätze 40, die einstückig mit dem Rest der Führungskulisse 16 verbunden sind, angeformt. Diese bolzenförmigen Fortsätze 40 werden von oben in die Ausnehmungen 30 eingerastet und werden teilweise von den hakenförmigen Fortsätzen 32 umgriffen (siehe Figur 2). Zwischen der Führungskulisse 16 und dem Lagerteil 18 wird dadurch eine Rastverbindung geschaffen.

Lagerteil 18 und Führungskulisse 16 werden im miteinander verbundenen Zustand von einem offenen Ende in die Profilschiene 14 eingeschoben. Wie Figur 2 zu entnehmen ist, liegen beide, eine Führungsachse bildende Fortsätze 40 vollständig innerhalb der Profilschiene 14 und unmittelbar unterhalb der Stege 34. Die Profilschiene 14 umgibt damit sowohl das Lagerteil 18 als auch die Fortsätze 40 und hindert die Fortsätze 40 daran, bei Ausübung einer zum Beispiel vertikal nach oben gerichteten Kraft aus den Ausnehmungen 30 herauszuspringen. Die Profilschiene 14 dient damit als formschlüssige Sicherung zwischen der Führungskulisse 16 und dem Lagerteil 18. Die Gleiteigenschaften werden durch das Lagerteil 18 bereitgestellt, während die hohen Festigkeitseigenschaften durch die Führungskulisse 16 und die angeformten Fortsätze 40 erfüllt werden. Bei einer nach oben gerichteten Krafteinleitung in die Führungskulisse 16 kann diese die Kraft sogar unmittelbar in die Profilschiene 14 einleiten, so daß im wesentlichen keine Zugbelastung in das Lagerteil 18 eingeleitet wird. Wird hingegen eine vertikal nach unten gerichtete Kraft auf die Führungskulisse ausgeübt, so führt diese zu reinen Druckbeanspruchungen im Kunststoff des Lagerteils 18, was allerdings für den Kunststoff im Gegensatz zu Zugbelastungen nicht problematisch ist.

Das hintere Lagerteil 24, auch hinterer Gleitschuh genannt, ist ebenfalls ein Einkomponenten-Spritzgußteil mit guten Gleiteigenschaften, vorzugsweise aus demselben Material wie das vordere Lagerteil 18. Am hinteren Lagerteil 24 ist ein Antriebskabel 50 befestigt, über das die Verschiebung des hinteren Lagerteils 24 erfolgt. Das Kabel 50 ist in einer in der Profilschiene 14 ausgebildeten Führungskammer 52 untergebracht. Die Befestigung an dem Lagerteil 24 erfolgt z.B. über eine Endblombe wie sie in der DE 201 11 621 beschrieben ist.

Das hintere Lagerteil 24 trägt ein Führungsteil 54, ebenfalls ein Einkomponenten-Spritzgußteil, das beispielsweise aus dem Material der Führungskulisse 16 hergestellt sein kann. Das Führungsteil 54 hat an jeder seiner Seiten jeweils zwei abstehende Fortsätze 56, die in entsprechende, nach oben offene Ausnehmungen 58 im Lagerteil 24 von oben eingesetzt werden können. Haken 60 am Führungsteil 54 dienen einer Verrastung nach dem Einschieben des Führungsteils 54 in das Lagerteil 24 und der Befestigung der Teile aneinander im vormontierten Zustand, solange diese Teile noch nicht in die Profilschiene 14 eingesetzt sind.

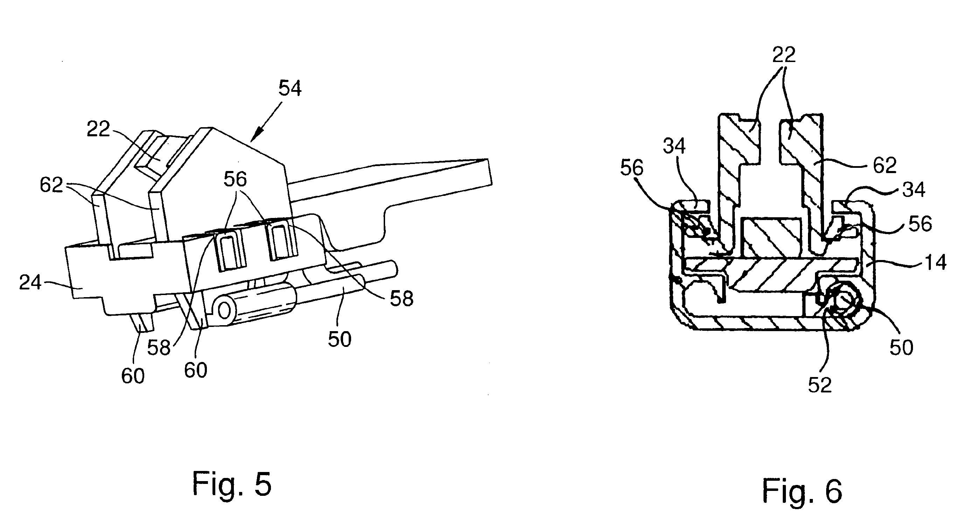

Wie Figur 6 zu entnehmen ist, dient auch hier die Profilschiene 14 der Sicherung von Führungsteil 54 und Lagerteil 24, denn die Querstege 34 liegen unmittelbar über den Fortsätzen 56, und die Fortsätze 56 liegen komplett innerhalb der Profilschiene 14. Entsprechend der Verbindung des vorderen Lagerteils 18 mit der Führungskulisse 16 wird auch hier durch die Profilschiene 14 jeder Fortsatz 56 am Verlassen der entsprechenden Ausnehmung 58 gehindert. Zwischen den Querstegen 34 ragen zwei Schenkel 62 des Führungsteils 54 aus der Profilschiene 14 heraus. Jeder Schenkel 62 besitzt eine als Kulissenstein einstückig angeformte, nach innen weisende Nase 22. Jede Nase 22 ragt in die ihr zugeordnete Kulissenbahn 20.

Mit Verschieben des Lagerteils 24 wandern auch die Nasen 22 horizontal nach vom oder hinten in ihrer Kulissenbahn 20. Wenn, mit Bezug auf Figur 1, das Lagerteil 24 nach hinten verschoben wird, schwenken die Führungskulisse 16 und der Deckel 10 nach unten.

Soll der Deckel 10 nach hinten verschoben werden, werden die Nasen 22 an das hintere Ende ihrer Kulissenbahnen 20 verschoben, so daß der hintere Rand 12 des Deckels 10 abgesenkt wird. Nun können Deckel 10, Führungskulisse 16, Führungsteil 54 und Lagerteile 18, 24 nach hinten verschoben werden.

Die in der Beschreibungseinleitung beschriebenen Vorteile des Führungsmechanismus beziehen sich, wie gesagt, sowohl auf das vordere als auch auf das hintere Lagerteil 18 bzw. 24. Die Führungskulisse 16 oder das Führungsteil 54 müssen nicht unmittelbar mit den Lagerteilen 18, 24 gekoppelt sein, auch andere Teile könnten zwischengeschaltet sein. Deshalb wird ganz allgemein von je einem Zwischenteil gesprochen, das in den Lagerteilen 18, 24 aufgenommen und durch die Profilschiene 14 gesichert wird.

Im übrigen muß nicht zwingend das Zwischenteil den Fortsatz 40, 56 und das Lagerteil 18, 24 die entsprechende Ausnehmung 30, 58 aufweisen. Auch eine umgekehrte Ausbildung wäre im Rahmen der Erfindung denkbar.

## Patentansprüche

1. Führungsmechanik für einen Deckel (10) eines Schiebehebedachs, mit
wenigstens einer seitlichen Profilschiene (14),
wenigstens je einem längs der Profilschiene (14) zur Verstellung des Deckels (10) beweglichen Lagerteil (18, 24) und
wenigstens einem Zwischenteil, das mit dem Lagerteil (18, 24) verbunden und zumindest indirekt mechanisch mit dem Deckel (10) gekoppelt ist,
**dadurch gekennzeichnet, daß** das Zwischenteil und das Lagerteil (18, 24) unmittelbar miteinander verbunden sind und das Zwischenteil einen Fortsatz (40, 56) hat, der innerhalb der Profilschiene (14) liegt und durch die Profilschiene (14) am Verlassen derselben gehindert wird.

2. Führungsmechanik nach Anspruch 1, **dadurch gekennzeichnet, daß** der Fortsatz (40, 56) in einer Ausnehmung (30, 58) im Lagerteil (18, 24) aufgenommen ist und durch die Profilschiene an einem Verlassen der Ausnehmung (30, 58) gehindert ist.

3. Führungsmechanik nach Anspruch 2, **dadurch gekennzeichnet, daß** die Ausnehmung (30, 58) im Lagerteil (18, 24) vertikal nach oben zur Aufnahme des Fortsatzes (40, 56) offen ist.

4. Führungsmechanik nach einem der vorhergehenden Ansprüche, **dadurch gekennzeichnet, daß** die Profilschiene (14) C-förmig ausgebildet ist und Lagerteil (18, 24) und Fortsatz (40, 56) umgreift.

5. Führungsmechanik nach einem der vorhergehenden Ansprüche, **dadurch gekennzeichnet, daß** die Profilschiene (14), bezogen auf den eingebauten Zustand, den Fortsatz (40, 56) zum Zwischenteil in vertikaler Richtung sichert.

6. Führungsmechanik nach einem der vorhergehenden Ansprüche, **dadurch gekennzeichnet, daß** das Lagerteil (18, 24) ein Ein-Komponenten-Kunststoffteil ist.

7. Führungsmechanik nach einem der vorhergehenden Ansprüche, **dadurch gekennzeichnet, daß** der Fortsatz (40, 56) einstückig am Zwischenteil angeformt ist.

8. Führungsmechanik nach einem der vorhergehenden Ansprüche, **dadurch gekennzeichnet, daß** das Zwischenteil ein Ein-Komponenten-Kunststoffteil ist.

9. Führungsmechanik nach einem der vorhergehenden Ansprüche, **dadurch gekennzeichnet, daß** der Fortsatz (40, 56) und das Lagerteil (18, 24) über eine Rastverbindung miteinander gekoppelt sind, die durch die Profilschiene (14) gesichert ist.

10. Führungsmechanik nach einem der vorhergehenden Ansprüche, **dadurch gekennzeichnet, daß** das Zwischenteil eine Führungskulisse (16) ist, die über den Fortsatz (40) schwenkbar im Lagerteil (18) gelagert ist.

11. Führungsmechanik nach einem der vorhergehenden Ansprüche, **dadurch gekennzeichnet, daß** das Lagerteil (24) ein hinterer Gleitschuh ist, dessen Verschiebung eine Schwenkbewegung einer Führungskulisse (16) und damit des Deckels (10) hervorruft, und daß das Zwischenteil das Lagerteil (24) mit der Führungskulisse (16) koppelt.

12. Führungsmechanik nach Anspruch 11, **dadurch gekennzeichnet, daß** wenigstens eine Nase (22) am Zwischenteil einstückig angeformt ist, welche in eine Kulissenbahn (20) in der Führungskulisse (16) ragt.
